# EUROPÄISCHE PATENTSCHRIFT

(11) **EP 3 259 703 B1**
(45) Veröffentlichungstag und Bekanntmachung des Hinweises auf die Patenterteilung: **11.11.2020**
(21) Anmeldenummer: 16706158.9
(22) Anmeldetag: 16.02.2016
(51) Int. Cl.: G06K 9/00, G06K 9/32

(54) **MOBILGERÄT ZUM ERFASSEN EINES TEXTBEREICHES AUF EINEM IDENTIFIKATIONSDOKUMENT**
MOBILE DEVICE FOR CAPTURING A TEXT RANGE ON AN IDENTIFICATION DOCUMENT
APPAREIL MOBILE POUR DÉTECTER UNE ZONE DE TEXTE SUR UN DOCUMENT D'IDENTIFICATION

(30) Priorität: 19.02.2015 DE 102015102369
(43) Veröffentlichungstag der Anmeldung: 27.12.2017
(73) Patentinhaber: Bundesdruckerei GmbH, 10969 Berlin (DE)
(72) Erfinder: HARTL, Andreas, 8010 Graz (AT); SCHMALSTIEG, Dieter, 8045 Graz (AT); DRESSEL, Olaf, 14641 Wustermark (DE)
(74) Vertreter: Patentship Patentanwaltsgesellschaft mbH
(86) Internationale Anmeldenummer: PCT/EP2016/053242
(87) Internationale Veröffentlichungsnummer: WO 2016/131812

(56) Entgegenhaltungen:
- EP-A1- 2 320 390
- FABRIZIO J ET AL: "Text segmentation in natural scenes using Toggle-Mapping", IMAGE PROCESSING (ICIP), 2009 16TH IEEE INTERNATIONAL CONFERENCE ON, IEEE, PISCATAWAY, NJ, USA, 7. November 2009 (2009-11-07), Seiten 2373-2376, XP031628154, ISBN: 978-1-4244-5653-6
- RAZAFINDRAMANANA OCTAVIO ET AL: "Alpha*-Approximated Delaunay Triangulation Based Descriptors for Handwritten Character Recognition", 2013 12TH INTERNATIONAL CONFERENCE ON DOCUMENT ANALYSIS AND RECOGNITION, IEEE, 25. August 2013 (2013-08-25), Seiten 440-444, XP032502761, ISSN: 1520-5363, DOI: 10.1109/ICDAR.2013.95 [gefunden am 2013-10-10]

## Beschreibung

Die vorliegende Erfindung betrifft das Gebiet der Erfassung von Textbereichen auf Identifikationsdokumenten.

Die Erfassung von Textbereichen, beispielsweise maschinen-lesbarer Zonen, auf Identifikationsdokumenten ist für die Gültigkeitsprüfung der Identifikationsdokumente oder für die Identifizierung von Personen von besonderer Bedeutung. Insbesondere bei Grenzkontrollen ist eine effiziente Erfassung mit hohen Genauigkeiten wünschenswert.

Üblicherweise erfolgt eine Erfassung von Textbereichen unter Verwendung stationärer Erfassungsgeräte, auf welche die Identifikationsdokumente manuell aufgelegt werden. Ferner können Mobilgeräte für die Erfassung von Textbereichen eingesetzt werden, wobei eine manuelle orthogonale Ausrichtung der Identifikationsdokumente bezüglich der Mobilgeräte durchgeführt wird. Sowohl bei stationären Erfassungsgeräten als auch bei Mobilgeräten werden folglich manuelle Handlungen durch einen Benutzer durchgeführt, welche die Erfassungszeit erhöhen und mit Effizienzverlusten verbunden sind.

In V. Bessmeltsev, E. Bulushev, N. Goloshevsky, "High-speed OCR algorithm for portable passport readers", GraphiCon, 2011, wird eine optische Zeichenerkennung für tragbare Reisepass-Lesegeräte beschrieben.

In Y. Wu, L. Xue, C. Li, "TDARS, a Fusion Based AR System for Machine Readable Travel Documents", HCl International, 2007, wird ein fusionsbasiertes Augmented Reality (AR) System für maschinen-lesbare Reisedokumente beschrieben.

Die Offenlegungsschrift EP 2 320 390 A1 offenbart ein Mobilgerät zum Auslesen einer maschinenlesbaren Zone mit Korrektur einer perspektivischen Verzerrung.

Die Druckschrift "FABRIZIO J ET AL: "Text segmentation in natural scenes using Toggle-Mapping", IMAGE PROCESSING (ICIP), 2009 16TH IEEE INTERNATIONAL CONFERENCE ON, IEEE, PISCATAWAY, NJ, USA, 7. November 2009 (2009-11-07), Seiten 2373-2376, XP031628154, ISBN: 978-1-4244-5653-6" offenbart ein Verfahren zur Textsegmentierung.

Eine Delaunay Triangulation zur Bestimmung von Textregionen ist aus der Druckschrift "Yi Xiao, Hong Yan: Location of title and author regions in document images based on the Delaunay triangulation", Image and Vision Computing 22 (2004), Seiten 319-329 bekannt. Es ist eine Aufgabe der vorliegenden Erfindung, ein effizientes Konzept zum Erfassen eines Textbereiches auf einem Identifikationsdokument zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Figuren.

Ein erfindungsgemäßes Mobilgerät umfasst eine Bildkamera und einen Prozessor, wobei die Bildkamera ausgebildet ist, ein Bild des Identifikationsdokumentes zu erfassen, um ein Diese Aufgabe wird durch die Merkmale der unabhängigen Ansprüche gelöst. Vorteilhafte Weiterbildungsformen sind Gegenstand der abhängigen Patentansprüche, der Beschreibung sowie der Figuren.

Die Erfindung basiert auf der Erkenntnis, dass die obige Aufgabe durch ein Mobilgerät gelöst werden kann, welches eine Bildkamera und einen Prozessor umfasst, wobei die Bildkamera ausgebildet ist, ein Bild des Identifikationsdokumentes zu erfassen, um ein Identifikationsdokumentes zu erfassen, um ein Dokumentenbild zu erhalten, und einem Prozessor, welcher ausgebildet ist, das Dokumentenbild zu segmentieren, um eine Mehrzahl von Bildsegmenten zu erhalten, eine Mehrzahl von Textzeichenbildsegmenten aus der Mehrzahl von Bildsegmenten auszuwählen, wobei die Textzeichenbildsegmente jeweils ein Textzeichen repräsentieren, eine Mehrzahl von Textzeichengruppen auf Basis der Mehrzahl von Textzeichenbildsegmenten zu bestimmen, wobei die Textzeichengruppen jeweils eine Folge von Textzeichenbildsegmenten umfassen, und eine Mehrzahl von Anordnungsmaßen der Mehrzahl von Textzeichengruppen mit dem vorbestimmten Anordnungsmaß zu vergleichen, um den Textbereich auf dem Identifikationsdokument zu erfassen. Dadurch wird der Vorteil erreicht, dass ein effizientes Konzept zum Erfassen eines Textbereiches auf einem Identifikationsdokument realisiert werden kann.

Das Mobilgerät kann ein Smartphone sein. Das vorbestimmte Anordnungsmaß kann eine Anzahl von Textzeichen je Textzeile anzeigen. Das vorbestimmte Anordnungsmaß kann ferner einen horizontalen und/oder vertikalen Abstand der Textzeichen anzeigen. Ein Textzeichen kann durch einen Buchstaben, eine Ziffer oder ein Symbol gebildet sein.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein, Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Gemäß einer Ausführungsform ist der Prozessor ausgebildet, ein Grauwertbild des Dokumentenbildes zu bestimmen. Dadurch wird der Vorteil erreicht, dass die Segmentierung des Dokumentenbildes effizient durchgeführt werden kann. Das Grauwertbild kann das Dokumentenbild zur Weiterverarbeitung bilden.

Gemäß einer Ausführungsform ist der Prozessor ausgebildet, eine Bildauflösung des Dokumentenbildes auf eine vorbestimmte Bildauflösung anzupassen. Dadurch wird der Vorteil erreicht, dass die Verarbeitung des Dokumentenbildes effizient durchgeführt werden kann. Die vorbestimmte Bildauflösung kann beispielsweise eine Bildauflösung von 640 x 480 Pixeln sein.

Gemäß einer Ausführungsform ist der Prozessor ausgebildet, das Dokumentenbild mittels eines Tiefpassfilters, insbesondere eines Gaußfilters, zu filtern. Dadurch wird der Vorteil erreicht, dass Bildrauschen in dem Dokumentenbild effizient reduziert werden kann. Durch die Filterung kann eine Weichzeichnung des Dokumentenbildes bewirkt werden.

Gemäß einer Ausführungsform ist der Prozessor ausgebildet, das Dokumentenbild mittels einer Segmentierung, insbesondere einer morphologischen zu segmentieren, um die Mehrzahl von Bildsegmenten zu erhalten. Dadurch wird der Vorteil erreicht, dass homogen zusammenhängende Bereiche des Dokumentenbildes effizient bestimmt werden können.

Gemäß einer Ausführungsform ist der Prozessor ausgebildet, der Mehrzahl von Bildsegmenten, insbesondere mittels Labeling, jeweils eine Bildsegmentkennung zuzuordnen. Dadurch wird der Vorteil erreicht, dass die Mehrzahl von Bildsegmenten effizient adressiert werden kann.

Gemäß einer Ausführungsform ist der Prozessor ausgebildet, eine Mehrzahl von Bildsegmentmaßen der Mehrzahl von Bildsegmenten zu bestimmen, und die Mehrzahl von Bildsegmentmaßen mit einem vorbestimmten Textzeichenmaß zu vergleichen, um die Mehrzahl von Textzeichenbildsegmenten aus der Mehrzahl von Bildsegmenten auszuwählen. Dadurch wird der Vorteil erreicht, dass die Mehrzahl von Textzeichenbildsegmenten effizient ausgewählt werden können.

Das vorbestimmte Textzeichenmaß kann eine Fläche, ein Seitenverhältnis, einen Füllgrad oder eine Kompaktheit eines vorbestimmten repräsentativen Textzeichens anzeigen.

Gemäß einer Ausführungsform ist der Prozessor ausgebildet, einen Verbindungsgraph auf Basis der Mehrzahl von Textzeichenbildsegmenten zu erzeugen, und die Mehrzahl von Textzeichengruppen unter Verwendung des Verbindungsgraphen zu bestimmen. Dadurch wird der Vorteil erreicht, dass effiziente Ansätze der Graphentheorie zum Bestimmen der Mehrzahl von Textzeichengruppen eingesetzt werden können. Die Schwerpunkte der Textzeichenbildsegmente können Knoten des Verbindungsgraphen bilden.

Gemäß einer Ausführungsform ist der Prozessor ausgebildet, die Mehrzahl von Textzeichengruppen mittels einer Triangulation, insbesondere mittels einer Delaunay-Triangulation, zu bestimmen. Dadurch wird der Vorteil erreicht, dass ein effizientes paarweises Gruppieren realisiert werden kann.

Unter Verwendung der Triangulation, insbesondere der Delaunay-Triangulation, können Textzeichenbildsegmente mit gemeinsamen Eigenschaften bestimmt werden. Die bestimmten Textzeichenbildsegmente können eine Textzeichengruppe bilden, welche ein Wort oder eine Folge von Textzeichen repräsentiert. Die gemeinsamen Eigenschaften umfassen beispielsweise eine Höhe, einen Abstand, einen Lageversatz, eine Fläche, einen Winkel, einen Grauwert oder eine Strichstärke.

Gemäß einer Ausführungsform ist der Prozessor ausgebildet, eine Mehrzahl starker Zusammenhangskomponenten des Verbindungsgraphen zu bestimmen, und die Mehrzahl von Textzeichengruppen auf Basis der Mehrzahl starker Zusammenhangskomponenten zu bestimmen. Dadurch wird der Vorteil erreicht, dass ein effizientes paarweises Gruppieren realisiert werden kann. Zur Bestimmung der Mehrzahl starker Zusammenhangskomponenten kann beispielsweise der Algorithmus von Tarjan eingesetzt werden.

Gemäß einer Ausführungsform ist der Prozessor ausgebildet, eine erste Textzeichengruppe und eine zweite Textzeichengruppe der Mehrzahl von Textzeichengruppen miteinander zu kombinieren, oder eine Textzeichengruppe der Mehrzahl von Textzeichengruppen in eine erste Textzeichengruppe und eine zweite Textzeichengruppe zu teilen. Dadurch wird der Vorteil erreicht, dass eine Kombination oder Teilung erreicht werden kann.

Die Kombination oder Teilung kann auf Basis von Eigenschaften der jeweiligen Textzeichengruppe durchgeführt werden. Dabei kann beispielsweise eine minimale Anzahl von Textzeichenbildsegmenten je Textzeichengruppe, ein maximaler oder minimaler Abstand, eine Ausrichtung, ein Grauwert, eine Fläche oder eine Strichstärke der Textzeichenbildsegmente berücksichtigt werden.

Gemäß einer Ausführungsform ist der Prozessor ausgebildet, die Mehrzahl von Anordnungsmaßen der Mehrzahl von Textzeichengruppen zu bestimmen. Dadurch wird der Vorteil erreicht, dass eine Mehrzahl von Anordnungsmaßen für einen Vergleich mit dem vorbestimmten Anordnungsmaß bereitgestellt werden kann.

Der Mehrzahl von Textzeichengruppen kann jeweils ein Anordnungsmaß zugeordnet sein. Ferner kann mehreren Textzeichengruppen, beispielsweise einem Paar von Textzeichengruppen, jeweils ein Anordnungsmaß zugeordnet sein.

Gemäß einer Ausführungsform ist der Prozessor ausgebildet, eine Raumlage der Bildkamera relativ zu dem erfassten Textbereich zu bestimmen, und den erfassten Textbereich auf Basis der bestimmten Raumlage perspektivisch zu entzerren. Dadurch wird der Vorteil erreicht, dass die Mehrzahl von Textzeichen des erfassten Textbereiches effizient erfasst werden kann.

Die Raumlage kann eine Pose der Bildkamera relativ zu dem erfassten Textbereich sein. Die Raumlage kann sechs Freiheitsgrade aufweisen, wobei drei Freiheitsgrade der relativen Position und drei Freiheitsgrade der relativen Ausrichtung zugeordnet sein können. Die perspektivische Entzerrung kann mittels einer Transformation durchgeführt werden, welche auf einer Schätzung einer Homographie basieren kann.

Gemäß einer Ausführungsform ist der Prozessor ausgebildet, eine optische Zeichenerkennung innerhalb des erfassten Textbereiches auf dem Identifikationsdokument durchzuführen. Dadurch wird der Vorteil erreicht, dass die Mehrzahl von Textzeichen des erfassten Textbereiches effizient erfasst werden kann.

Die optische Zeichenerkennung (Optical Character Recognition, OCR) kann einzeln für jedes Textzeichenbildsegment innerhalb des erfassten Textbereiches durchgeführt werden. Die optische Zeichenerkennung kann unter Verwendung eines hochaufgelösten ursprünglichen Dokumentenbildes durchgeführt werden.

Die optische Zeichenerkennung kann mittels einer Segmentierung, insbesondere mittels morphologischen Segmentierung oder mittels Toggle-Mapping, eines Textzeichenbildsegments durchgeführt werden. Das Textzeichenbildsegment kann in eine Mehrzahl von Kacheln unterteilt werden, wobei Eigenschaften der Mehrzahl von Kacheln in einem Merkmalsvektor zusammengefasst werden können. Durch einen Vergleich des Merkmalsvektors mit einer Mehrzahl von vorbestimmten Vorlagenmerkmalsvektoren kann ein einzelnes Textzeichen erfasst werden.

Die morphologische Segmentierung ermöglicht dabei eine besonders effiziente Berechenbarkeit.

Gemäß einer Ausführungsform ist einem Textzeichen des Textbereiches ein vorbestimmter Zeichensatz zugeordnet, wobei der vorbestimmte Zeichensatz zulässige Buchstaben, Ziffern, oder Symbole des Textzeichens anzeigt, und wobei die optische Zeichenerkennung des Textzeichens unter Verwendung des vorbestimmten Zeichensatzes durchgeführt wird. Dadurch wird der Vorteil erreicht, dass eine effiziente optische Zeichenerkennung durchgeführt werden kann.

Der vorbestimmte Zeichensatz kann beispielsweise alphabetische, nummerische oder alphanummerische Textzeichen umfassen. Für maschinen-lesbare Zonen kann der vorbestimmte Zeichensatz gemäß Standards der ICAO (International Civil Aviation Organization) standardisiert sein.

Gemäß einer Ausführungsform ist die Bildkamera ausgebildet, ein weiteres Bild des Identifikationsdokumentes zu erfassen, um ein weiteres Dokumentenbild zu erhalten, wobei der Prozessor ausgebildet ist, den Textbereich in dem weiteren Dokumentenbild zu erfassen, und die optische Zeichenerkennung innerhalb des erfassten Textbereiches ferner unter Verwendung des weiteren Dokumentenbildes durchzuführen. Dadurch wird der Vorteil erreicht, dass eine Fusion unter Verwendung des Dokumentenbildes und des weiteren Dokumentenbildes realisiert werden kann.

Gemäß einer Ausführungsform weist der Textbereich eine vorbestimmte Textbereichsanordnung gemäß eines vorbestimmten Textbereichsanordnungsmaßes auf dem Identifikationsdokument auf, wobei der Prozessor ausgebildet ist, das Identifikationsdokument in dem Dokumentenbild auf Basis des erfassten Textbereiches und des vorbestimmten Textbereichsanordnungsmaßes zu erfassen. Dadurch wird der Vorteil erreicht, dass das Identifikationsdokument in dem Dokumentenbild effizient erfasst werden kann.

Das vorbestimmte Textbereichsanordnungsmaß kann einen vorbestimmten Randabstand des Textbereiches bezüglich des Identifikationsdokumentes anzeigen. Auf Basis des erfassten Textbereiches und des vorbestimmten Textbereichsanordnungsmaßes kann ein Suchbereich einer Kantendetektion des Identifikationsdokumentes in dem Dokumentenbild eingegrenzt werden.

Gemäß einer Ausführungsform ist der Prozessor ausgebildet, eine Raumlage der Bildkamera relativ zu dem erfassten Textbereich zu bestimmen, wobei die Bildkamera ausgebildet ist, ein weiteres Bild des Identifikationsdokumentes zu erfassen, um ein weiteres Dokumentenbild zu erhalten, und wobei der Prozessor ausgebildet ist, den Textbereich in dem weiteren Dokumentenbild unter Verwendung der bestimmten Raumlage zu erfassen. Dadurch wird der Vorteil erreicht, dass eine effiziente Erfassung und Verfolgung des Textbereiches realisiert werden kann.

Auf Basis der bestimmten Raumlage kann ein partielles Erfassen des Textbereiches und/oder ein partielles Erfassen der Textzeichen innerhalb des Textbereiches durchgeführt werden.

Gemäß einer Ausführungsform ist der Textbereich eine maschinen-lesbare Zone des Identifikationsdokumentes. Dadurch wird der Vorteil erreicht, dass ein standardisiertes vorbestimmtes Anordnungsmaß verwendet werden kann.

Die Anordnung der Mehrzahl von Textzeichen maschinen-lesbarer Zonen kann gemäß Standards der ICAO (International Civil Aviation Organization) standardisiert sein. Maschinen-lesbare Zonen können beispielsweise 3x30 Textzeichen, 2x36 Textzeichen, oder 2x44 Textzeichen aufweisen. Die Textzeichen können unter Verwendung einer OCR-B Schriftart gebildet sein.

Gemäß einer Ausführungsform kann die maschinen-lesbare Zone eine unregelmäßige Struktur aufweisen. Zur Auslesen bzw. zur Detektion von Daten einer derartigen maschinen-lesbaren Zone kann eine Analyse von beispielsweise Text-Gruppen durchgeführt werden, wobei die Berechnung der Koordinaten zur Entzerrung um die Bearbeitung bzw. Behandlung der jeweiligen Struktur erweitert werden kann.

Gemäß einem zweiten Aspekt betrifft die Erfindung ein Verfahren zum Erfassen eines Textbereiches auf einem Identifikationsdokument, wobei der Textbereich eine Mehrzahl von Textzeichen in einer vorbestimmten Anordnung gemäß einem vorbestimmten Anordnungsmaß aufweist, mit einem Erfassen eines Bildes des Identifikationsdokumentes, um ein Dokumentenbild zu erhalten, einem Segmentieren des Dokumentenbildes, um eine Mehrzahl von Bildsegmenten zu erhalten, einem Auswählen einer Mehrzahl von Textzeichenbildsegmenten aus der Mehrzahl von Bildsegmenten, wobei die Textzeichenbildsegmente jeweils ein Textzeichen repräsentieren, einem Bestimmen einer Mehrzahl von Textzeichengruppen auf Basis der Mehrzahl von Textzeichenbildsegmenten, wobei die Textzeichengruppen jeweils eine Folge von Textzeichenbildsegmenten umfassen, und einem Vergleichen einer Mehrzahl von Anordnungsmaßen der Mehrzahl von Textzeichengruppen mit dem vorbestimmten Anordnungsmaß, um den Textbereich auf dem Identifikationsdokument zu erfassen. Dadurch wird der Vorteil erreicht, dass ein effizientes Konzept zum Erfassen eines Textbereiches auf einem Identifikationsdokument realisiert werden kann.

Das Verfahren kann durch das Mobilgerät ausgeführt werden. Weitere Merkmale des Verfahrens ergeben sich unmittelbar aus der Funktionalität des Mobilgerätes.

Gemäß einem dritten Aspekt betrifft die Erfindung ein Computerprogramm mit einem Programmcode zum Ausführen des Verfahrens, wenn das Computerprogramm auf einem Computer ausgeführt wird. Dadurch wird der Vorteil erreicht, dass das Verfahren automatisiert und wiederholbar ausgeführt werden kann. Das Mobilgerät kann programmtechnisch eingerichtet sein, um das Computerprogramm auszuführen.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein Diagramm eines Mobilgerätes zum Erfassen eines Textbereiches auf einem Identifikationsdokument gemäß einer Ausführungsform;
- Fig. 2: ein Diagramm eines Verfahrens zum Erfassen eines Textbereiches auf einem Identifikationsdokument gemäß einer Ausführungsform;
- Fig. 3: ein Diagramm eines Textbereiches auf einem Identifikationsdokument gemäß einer Ausführungsform;
- Fig. 4: ein Diagramm einer Mehrzahl von Textzeichen innerhalb von Textbereichen gemäß einer Ausführungsform;
- Fig. 5: ein Diagramm eines Verfahrens zum Erfassen eines Textbereiches auf einem Identifikationsdokument gemäß einer Ausführungsform;
- Fig. 6: ein Diagramm eines Verfahrens zum Erfassen eines Textbereiches auf einem Identifikationsdokument gemäß einer Ausführungsform;
- Fig. 7: ein Diagramm perspektivisch verzerrter Textzeichen eines Textbereiches auf einem Identifikationsdokument gemäß einer Ausführungsform;
- Fig. 8: ein Diagramm eines Verfahrens zum Erfassen eines Identifikationsdokumentes auf Basis eines erfassten Textbereiches gemäß einer Ausführungsform;
- Fig. 9: ein Diagramm eines Verfahrens zum Verfolgen eines Textbereiches in einer Mehrzahl von Dokumentenbildern gemäß einer Ausführungsform; und
- Fig. 10: ein Diagramm eines Verfahrens zum Verfolgen eines Textbereiches in einer Mehrzahl von Dokumentenbildern gemäß einer Ausführungsform.

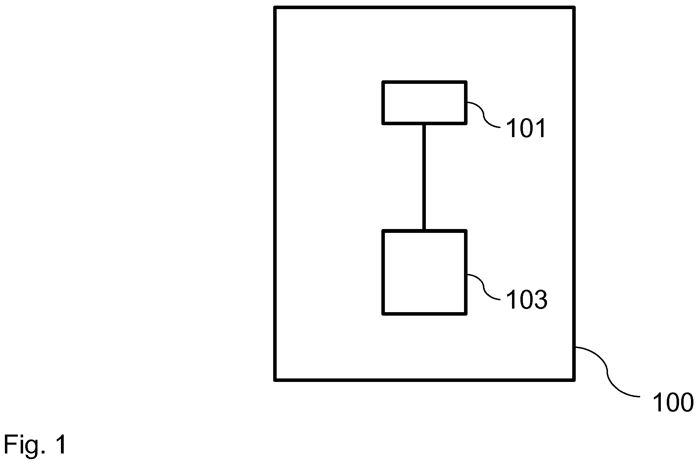

Fig. 1 zeigt ein Diagramm eines Mobilgerätes 100 zum Erfassen eines Textbereiches auf einem Identifikationsdokument gemäß einer Ausführungsform. Der Textbereich weist eine Mehrzahl von Textzeichen in einer vorbestimmten Anordnung gemäß einem vorbestimmten Anordnungsmaß auf.

Das Mobilgerät 100 umfasst eine Bildkamera 101, welche ausgebildet ist, ein Bild des Identifikationsdokumentes zu erfassen, um ein Dokumentenbild zu erhalten, und einen Prozessor 103, welcher ausgebildet ist, das Dokumentenbild zu segmentieren, um eine Mehrzahl von Bildsegmenten zu erhalten, eine Mehrzahl von Textzeichenbildsegmenten aus der Mehrzahl von Bildsegmenten auszuwählen, wobei die Textzeichenbildsegmente jeweils ein Textzeichen repräsentieren, eine Mehrzahl von Textzeichengruppen auf Basis der Mehrzahl von Textzeichenbildsegmenten zu bestimmen, wobei die Textzeichengruppen jeweils eine Folge von Textzeichenbildsegmenten umfassen, und eine Mehrzahl von Anordnungsmaßen der Mehrzahl von Textzeichengruppen mit dem vorbestimmten Anordnungsmaß zu vergleichen, um den Textbereich auf dem Identifikationsdokument zu erfassen.

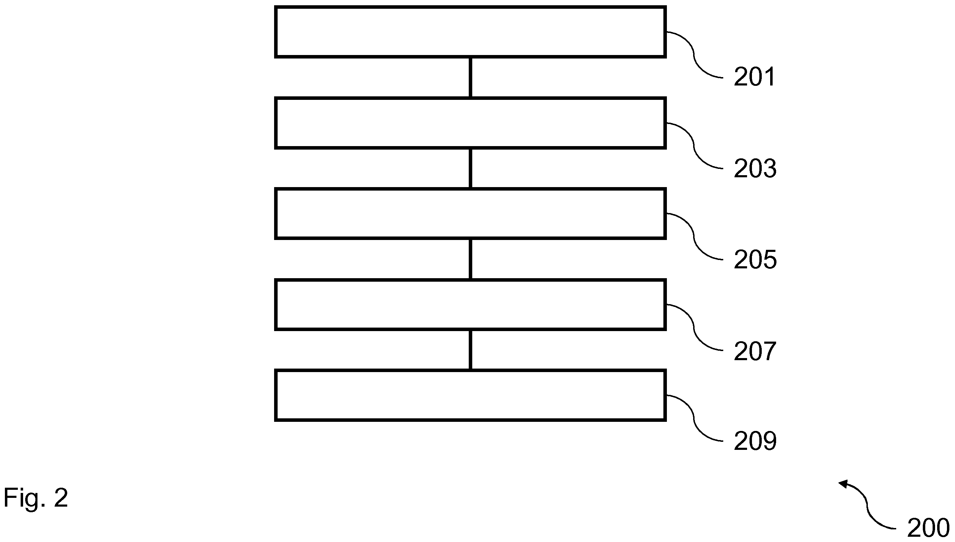

Fig. 2 zeigt ein Diagramm eines Verfahrens 200 zum Erfassen eines Textbereiches auf einem Identifikationsdokument gemäß einer Ausführungsform. Der Textbereich weist eine Mehrzahl von Textzeichen in einer vorbestimmten Anordnung gemäß einem vorbestimmten Anordnungsmaß auf.

Das Verfahren 200 umfasst ein Erfassen 201 eines Bildes des Identifikationsdokumentes, um ein Dokumentenbild zu erhalten, ein Segmentieren 203 des Dokumentenbildes, um eine Mehrzahl von Bildsegmenten zu erhalten, ein Auswählen 205 einer Mehrzahl von Textzeichenbildsegmenten aus der Mehrzahl von Bildsegmenten, wobei die Textzeichenbildsegmente jeweils ein Textzeichen repräsentieren, ein Bestimmen 207 einer Mehrzahl von Textzeichengruppen auf Basis der Mehrzahl von Textzeichenbildsegmenten, wobei die Textzeichengruppen jeweils eine Folge von Textzeichenbildsegmenten umfassen, und ein Vergleichen 209 einer Mehrzahl von Anordnungsmaßen der Mehrzahl von Textzeichengruppen mit dem vorbestimmten Anordnungsmaß, um den Textbereich auf dem Identifikationsdokument zu erfassen. Das Verfahren 200 kann durch das Mobilgerät 100 ausgeführt werden.

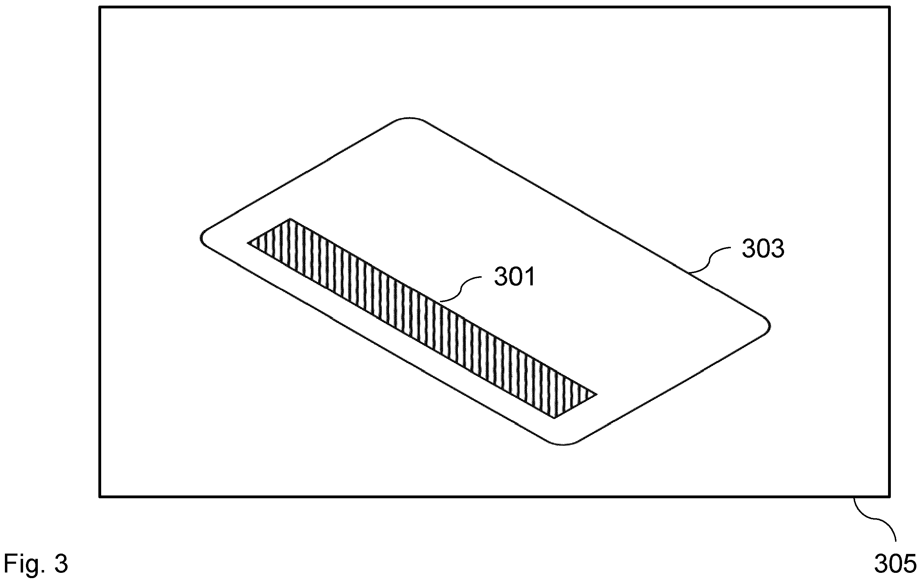

Fig. 3 zeigt ein Diagramm eines Textbereiches 301 auf einem Identifikationsdokument 303 gemäß einer Ausführungsform. Ein Dokumentenbild 305 zeigt ein perspektivisch verzerrtes Bild des Identifikationsdokumentes 303.

Der Textbereich 301 kann eine maschinen-lesbare Zone des Identifikationsdokumentes 303 sein. Die maschinen-lesbare Zone kann beispielsweise 3x30 Textzeichen, 2x36 Textzeichen, oder 2x44 Textzeichen aufweisen. Die Textzeichen können unter Verwendung einer OCR-B Schriftart gebildet sein.

Die maschinen-lesbare Zone kann jedoch auch eine unregelmäßige Struktur aufweisen. Zur Auslesen bzw. zur Detektion von Daten einer derartigen maschinen-lesbaren Zone kann eine Analyse von beispielsweise Text-Gruppen bzw. Bereichen durchgeführt werden.

Das Identifikationsdokument 303 kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein, Kraftfahrzeugausweis, Zahlungsmittel, beispielsweise eine Bankkarte oder Kreditkarte. Das Identifikationsdokument 303 kann ferner einen elektronisch auslesbaren Schaltkreis, beispielsweise einen RFID-Chip umfassen. Das Identifikationsdokument 303 kann ein- oder mehrlagig bzw. papier- und/oder kunststoffbasiert sein. Das Identifikationsdokument 303 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Das Dokumentenbild 305 kann ein Farbwertbild oder ein Grauwertbild sein. Das Dokumentenbild 305 kann eine vorbestimmte Bildauflösung aufweisen.

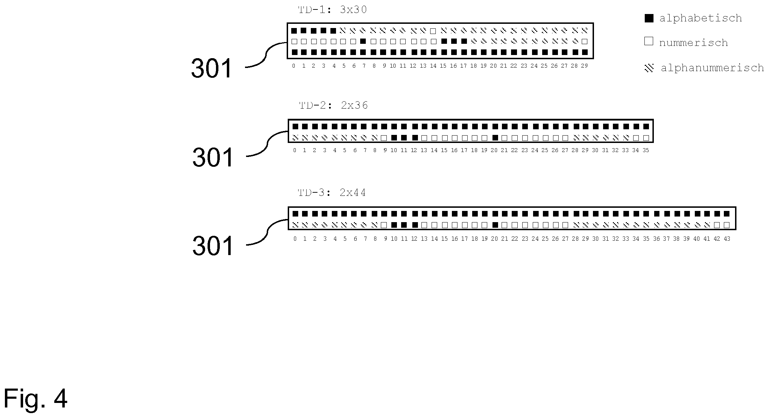

Fig. 4 zeigt ein Diagramm einer Mehrzahl von Textzeichen innerhalb von Textbereichen 301 gemäß einer Ausführungsform. Die Textbereiche 301 sind jeweils durch eine maschinen-lesbare Zone eines Identifikationsdokumentes gebildet. Maschinen-lesbare Zonen können unterschiedliche Strukturen aufweisen.

Es gibt drei verschiedene Typen, welche zwei oder drei Textzeilen umfassen. Die drei verschiedenen Typen können jeweils 90, 72 oder 88 einzelne Textzeichen aufweisen. Die einzelnen Textzeichen können einem alphabetischen Zeichensatz, einem nummerischen Zeichensatz oder einem alphanummerischen Zeichensatz entnommen sein.

Im Folgenden werden weitere Ausführungsbeispiele des Mobilgerätes 100 und des Verfahrens 200 näher beschrieben. Das Mobilgerät 100 und das Verfahren 200 können zur Erfassung und Erkennung von Textbereichen 301, beispielsweise maschinen-lesbaren Zonen, in Echtzeit eingesetzt werden.

Eine Prüfung von Identifikationsdokumenten 303, wie beispielsweise von Reisepässen, ist eine bedeutende Aufgabe. Insbesondere in Situationen mit einem großen Durchsatz von zu überprüfenden Personen, ist die Zeit zur Prüfung von Identifikationsdokumenten 303 sehr begrenzt. Textbereiche 301, insbesondere maschinen-lesbare Zonen, auf Identifikationsdokumenten 303 werden verwendet, um Prüfungen zu beschleunigen und um menschliche Fehler beim Lesen der Textzeichen, welche beispielsweise zur Identifikation verwendet werden, zu vermeiden.

Es gibt drei verschiedene Typen maschinen-lesbarer Zonen, welche üblicherweise auf der Vorderseite oder Identitätsseite von Identifikationsdokumenten 303 angeordnet sind. Die maschinen-lesbaren Zonen umfassen einen Absatz mit zwei oder drei parallelen Textzeilen schwarzen OCR-B Textes mit fester Breite und Größe sowie einem festen Zwischenzeilenabstand. Die Textzeilen umfassen persönliche Informationen über den Inhaber des Identifikationsdokumentes 303, Informationen über das Identifikationsdokument 303 und verschiedene Prüfsummen.

Das Erfassen und Auslesen von Textbereichen 301, beispielsweise maschinen-lesbarer Zonen, erfolgt üblicherweise unter Verwendung dedizierter stationärer Erfassungsgeräte oder Mobilgeräte. Bei üblichen Ansätzen wird der Textbereich 301, beispielsweise die maschinen-lesbare Zone, bezüglich des Gerätes manuell ausgerichtet bevor ein Erfassen und Auslesen durchgeführt werden kann. Dies verlängert die Erfassungs- und Auslesezeit und läuft der ursprünglichen Intention entgegen.

Dabei ist hervorzuheben, dass ein automatisches Erfassen und Auslesen eines Textbereiches 301, beispielsweise einer maschinen-lesbaren Zone, sowie eine optische Zeichenerkennung in einem allgemeinen Umfeld eine herausfordernde Aufgabe darstellen. Dadurch, dass kein Vorwissen über die Anwesenheit eines Textbereiches 301 vorhanden sein kann, sollte der Textbereich 301 automatisch und in Echtzeit identifiziert werden, ungeachtet einer möglichen Bewegungsunschärfe und anderer Widrigkeiten typischer Erfassungsszenarien mit Mobilgeräten. Die darauffolgende optische Zeichenerkennung soll dabei eine hohe Erkennungsleistung aufweisen.

Das Mobilgerät 100 und das Verfahren 200 stellen eine Lösung zur Erfassung und Erkennung von Textbereichen 301, beispielsweise maschinen-lesbarer Zonen, auf beliebigen Identifikationsdokumenten 303 in Echtzeit ohne zusätzliche Hardware bereit. Dabei kann eine hohe Varianz der Raumlagen oder Blickwinkel während der Erfassung toleriert werden. Ferner kann eine visuelle Rückmeldung über den Betriebsstatus an einen Benutzer bereitgestellt werden, um eine visuelle Führung zu ermöglichen. Im Folgenden wird eine mögliche Herangehensweise beschrieben.

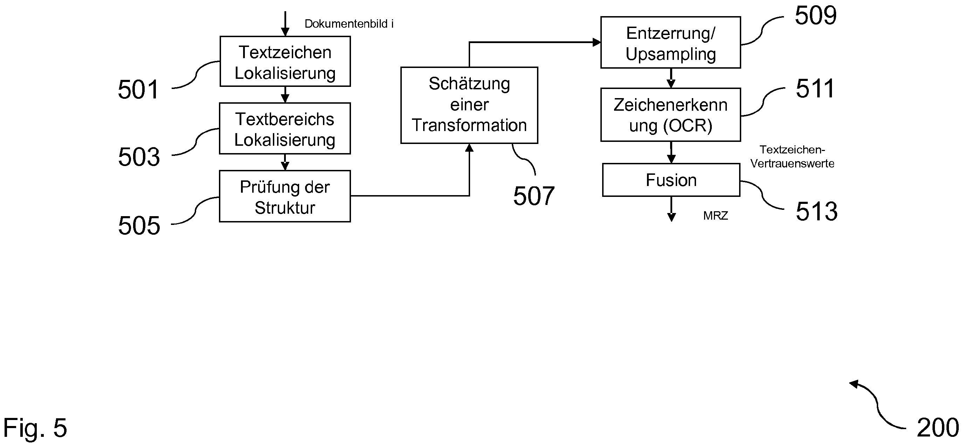

Fig. 5 zeigt ein Diagramm eines Verfahrens 200 zum Erfassen eines Textbereiches auf einem Identifikationsdokument gemäß einer Ausführungsform. Das Verfahren 200 umfasst eine Mehrzahl von Schritten 501-513. Die Mehrzahl von Schritten 501-513 kann durch das Mobilgerät 100, beispielsweise den Prozessor 103, ausgeführt werden.

In Schritt 501 wird eine Textzeichen-Lokalisierung auf Basis eines Dokumentenbildes i durchgeführt. In Schritt 503 wird eine Textbereichs-Lokalisierung, beispielsweise eine MRZ-Lokalisierung, durchgeführt. In Schritt 505 wird eine Prüfung der Struktur des Textbereiches durchgeführt. In Schritt 507 wird eine Transformation geschätzt. In Schritt 509 erfolgen eine perspektivische Entzerrung und/oder ein Upsampling. In Schritt 511 wird eine optische Zeichenerkennung durchgeführt, welche Textzeichen-Vertrauenswerte bereitstellt. In Schritt 513 erfolgt eine Fusion, wobei der Textbereich, beispielsweise die MRZ, bereitgestellt werden kann. Die Struktur des Textbereiches, welche durch das vorbestimmte Anordnungsmaß angezeigt werden kann, wird innerhalb einer Mehrzahl von Textzeichengruppen detektiert. Anschließend werden einzelne Textzeichen unter Verwendung einer geschätzten Transformation entzerrt und unter Verwendung einer optischen Zeichenerkennung verarbeitet. Mehrere Dokumentenbilder können fusioniert werden, um eine verbesserte Leistung zu erzielen.

Es wurde eine Menge von Texteigenschaften von Text auf Identifikationsdokumenten, insbesondere von maschinen-lesbaren Zonen, identifiziert, welche zur Erfassung und zum Auslesen hilfreich sind. Textbereiche auf Identifikationsdokumenten sind zumeist kleiner als textähnliche Verzerrungen im Hintergrund. Ein lokaler Textbereich, welcher Textzeichen umfasst, weist normalerweise eine einzige Farbe mit begrenzten Variationen auf, und die Strichstärke jedes Textzeichens ist typischerweise konstant. Die Grenzen der Textzeichen sind üblicherweise geschlossen und Verbindungslinien auf der Kontur sind typischerweise glatt. Diese Grenzen können weitestgehend den Kanten entsprechen, welche in dem Dokumentenbild erfasst werden können. Einzelne Textzeichen innerhalb der Textbereiche haben zumeist sehr ähnliche Eigenschaften und sind entlang einer gerichteten Line ausgerichtet. In den meisten Fällen kann eine minimale Anzahl von Textzeichen je Textbereich angenommen werden.

Der Ansatz zum mobilen Auslesen eines Textbereiches, beispielsweise einer maschinen-lesbaren Zone, umfasst mehrere Schritte 501-513. Zunächst wird die Lage von Textzeichenbildsegmenten oder Textzeichenkandidaten in dem Dokumentenbild bestimmt. Aus dieser Information wird der Textbereich, beispielweise die maschinen-lesbare Zone, unter Berücksichtigung der räumlichen Anordnung zwischen Textzeichengruppen oder Textzeichengruppenkandidaten erfasst. Dann wird eine lokale Transformation für jedes Textzeichen geschätzt, welche zur Entzerrung verwendet werden kann, gefolgt von einer Erkennung der Textzeichen, welche einen Vertrauenswert bezüglich jedes Textzeichens der relevanten Teilmenge der OCR-B Schriftart bereitstellen kann. Schließlich wird Information aus mehreren Dokumentenbildern fusioniert, um die Ergebnisse zu verbessern. Im Folgenden werden diese Schritte detaillierter beschrieben.

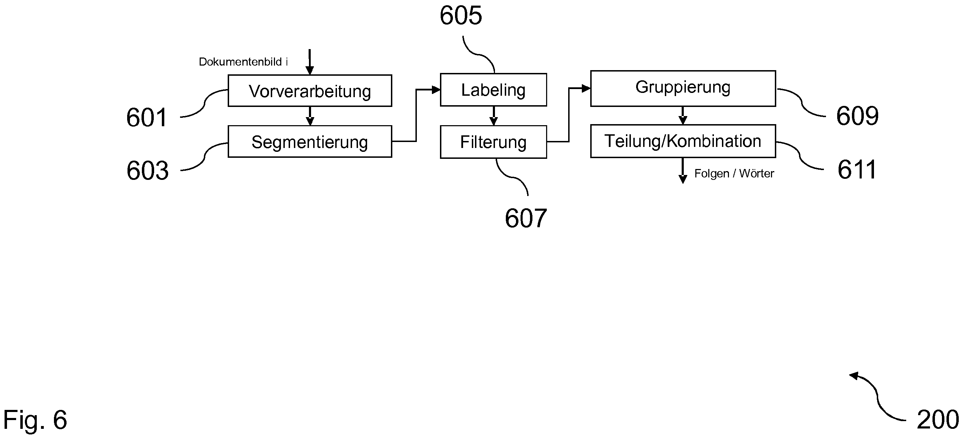

Fig. 6 zeigt ein Diagramm eines Verfahrens 200 zum Erfassen eines Textbereiches auf einem Identifikationsdokument gemäß einer Ausführungsform. Das Verfahren 200 umfasst eine Mehrzahl von Schritten 601-611. Die Mehrzahl von Schritten 601-611 kann durch das Mobilgerät 100, beispielsweise den Prozessor 103, ausgeführt werden.

In Schritt 601 wird eine Vorverarbeitung eines Dokumentenbildes i durchgeführt. In Schritt 603 erfolgt eine Segmentierung des Dokumentenbildes. In Schritt 605 wird ein Labeling durchgeführt. In Schritt 607 erfolgt eine Filterung. In Schritt 609 wird eine Gruppierung durchgeführt. In Schritt 611 erfolgt eine Teilung und/oder Kombination, um Textzeichengruppen bereitzustellen, welche Folgen oder Wörter repräsentieren. Zusammenhängende Textzeichenbildsegmente werden auf Basis einer initialen Segmentierung bestimmt, werden mittels eines Labeling verarbeitet, und werden gefiltert. Anschließend werden sie paarweise gruppiert und in Folgen oder Wörter aufgeteilt, und stellen somit eine Grundlage für die Erfassung des Textbereiches dar.

Die Erfassung des Textbereiches kann folgendermaßen erfolgen. Unter Verwendung eines Toggle-Mappings und eines zeit-linearen Labelings, kann eine initiale Erzeugung zusammenhängender Textzeichenbildsegmente erreicht werden. Ein initiales Filtern kann auf Grundlage der Geometrie und weiteren Randbedingungen von Textzeichen, wie beispielsweise Fläche, Ausdehnung, Seitenverhältnis, Füllgrad und Kompaktheit, durchgeführt werden. Ferner kann ein Kantenkontrast oder eine Strichstärke ausgewertet werden. Gemäß einer Ausführungsform wird dadurch ein Textzeichenmaß bereitgestellt.

Ähnliche Textzeichenbildsegmente können gruppiert werden, basierend auf Eigenschaften und einer räumlichen Kohärenz der Textzeichenbildsegmente. Aus Gründen der Effizienz kann eine Delaunay-Triangulation verwendet werden, um ein initiales paarweises Gruppieren zu erreichen, und somit Textzeichengruppen bereitzustellen. Paarweise Verbindungen in einem Verbindungsgraphen werden dann gefiltert unter Verwendung verschiedener relativer Kriterien, wie beispielsweise Höhe, Abstand, Lageversatz, Fläche, Winkel, Grauwert, und Strichstärke, gefolgt von einer Erzeugung starker zusammenhängender Komponenten. Dies ergibt eine Reihe geordneter Textzeichengruppen, welche im Idealfall einzelne Wörter oder Folgen von Textzeichen repräsentieren, jedoch, abhängig von der Parametrierung und Struktur des Identifikationsdokumentes, mehrere Wörter oder Folgen von Textzeichen umfassen können. Deshalb kann eine zusätzliche Filterung eingesetzt werden.

Durch eine Teilung oder Kombination der Textzeichengruppen basierend auf Textzeichengruppeneigenschaften, wie beispielsweise minimaler Anzahl von Komponenten, maximaler/minimaler Abstand, Ausrichtung, Grauwert, Fläche und Strichstärke, können endgültige Textzeichengruppen bereitgestellt werden.

Aus den Textzeichengruppen können die individuellen Komponenten des Textbereiches, beispielsweise der maschinen-lesbaren Zone, durch eine Analyse ihrer Geometrie erfasst werden. Dabei kann nach Textzeichengruppen gesucht werden, die ein Kriterium minimaler Länge, beispielsweise 30 Textzeichen, erfüllen. Während der Auswahl können ferner ihre horizontalen und vertikalen Abstände analysiert werden. Gemäß einer Ausführungsform wird dadurch ein vorbestimmtes Anordnungsmaß bereitgestellt.

Folglich wird eine Anzahl von Textzeichengruppen bereitgestellt, welche den zu erfassenden Textbereich bilden. Die Anzahl von Textzeichengruppen kann in einer Verarbeitung durch eine optische Zeichenerkennung berücksichtigt werden. Gemäß einer Ausführungsform umfasst der zu erfassende Textbereich eine Textzeichengruppe. Gemäß einer weiteren Ausführungsform umfasst der zu erfassende Textbereich mehrere Textzeichengruppen.

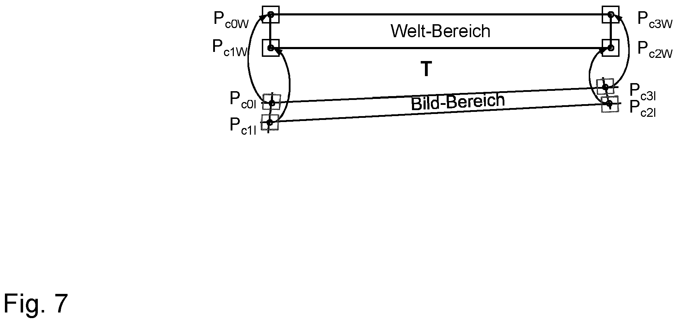

Fig. 7 zeigt ein Diagramm perspektivisch verzerrter Textzeichen eines Textbereiches auf einem Identifikationsdokument gemäß einer Ausführungsform. Das Diagramm illustriert die Entzerrung von Textzeichen. Zunächst wird eine globale Transformation T unter Verwendung von Schnittpunkten angepasster Linien auf Basis von Bild-Koordinaten P_{c0I}, P_{c1I}, P_{c2I}, P_{c3I} im Bild-Bereich und korrespondierenden Welt-Koordinaten P_{c0W}, P_{c1W}, P_{c2W}, P_{c3W} im Welt-Bereich geschätzt. Anschließend kann eine lokale Transformation je Textzeichen geschätzt werden, welche dann für eine Entzerrung des Textzeichenbildsegmentes verwendet wird.

Die erfassten Textzeichen können unter Verwendung von Strukturinformationen des Textbereiches, beispielsweise der maschinen-lesbaren Zone, entzerrt werden. Zunächst werden horizontale und vertikale Linien auf die erfassten Textzeichenbildsegmente des Textbereiches unter Verwendung einer linearen Regression auf ihre Schwerpunkte angepasst. Diese Linien werden ferner geschnitten, um verbesserte Schätzungen der vier äußersten Textzeichenmittelpunkte P_{cI} bereitzustellen. Unter Verwendung bekannter Eigenschaften der Schriftart, beispielsweise der OCR-B Schriftart, können korrespondierende Koordinaten P_{cW} in dem entzerrten Welt-Bereich bestimmt werden, welche es erlauben, eine perspektivische Transformation T zu schätzen.

Für jeden Textzeichenschwerpunkt, wie aus dem Schnitt-Prozess erhalten, können die Grenzen des Textzeichenbildsegmentes im Welt-Bereich unter Verwendung von Schrifteigenschaften bestimmt werden und dann in das Dokumentenbild projiziert werden. Nun kann eine lokale Transformation für jedes Textzeichen geschätzt werden, welche für die Entzerrung eingesetzt werden kann. Um die Eingangsdaten für die optische Zeichenerkennung zu verbessern, kann ferner ein Upsampling der Textzeichenbildsegmente während der Entzerrung durchgeführt werden.

Die optische Zeichenerkennung kann folgendermaßen durchgeführt werden. Die optische Zeichenerkennung verwendet die Ergebnisse einer folgenden Binarisierung als Eingangsdaten. Hierfür kann beispielsweise Toggle-Mapping verwendet werden, wobei die erhaltene Binärmaske einem Labeling unterzogen werden kann, und eine minimale Begrenzungsbox für das Textzeichen geschätzt werden kann.

Durch eine Auswahl von Dokumentenbildern kann eine kleine Anzahl von Abtastwerten für die Erkennung eines einzelnen Textzeichens ausreichen. Dabei kann eine Überlapp-Metrik zur Zeichenerkennung verwendet werden, welche auf einem regulären Gitter berechnet werden kann. Der lokale Überlapp kann für jede Kachel oder Zelle des Textzeichenbildsegmentes berechnet werden und als Merkmalsvektor gespeichert werden. Unter Verwendung eines L₁ Abstandes, kann eine Ähnlichkeit hinsichtlich einer Mehrzahl von Vorlagen berechnet werden, welche auch als Vertrauenswert aufgefasst werden kann. Initiale Abtastwerte können durch ein Rendern von True-Type Schriften erzeugt werden. Anschließend kann eine kleine Anzahl von realen Abtastwerten hinzugefügt werden, welche unter Verwendung des beschriebenen Ansatzes extrahiert wurde.

Eine Fusion kann beispielsweise folgendermaßen durchgeführt werden. Wenn ein Live-Video zur Verfügung steht, können mehrere Dokumentenbilder i durch das Mobilgerät verarbeitet werden, um die Robustheit zu erhöhen. Für einen folgenden Fusions-Prozess sollten Korrespondenzen zwischen den Textzeichen hergestellt werden. Beim Verfolgen durch Erfassen wird die Struktur des initialen Erfassungsergebnisses berücksichtigt, wann immer nach geeigneten Dokumentbildern gesucht wird. Gemäß einer Ausführungsform werden Dokumentenbilder zur Fusion auf Basis einer Bildschärfe oder Beleuchtung der Dokumentenbilder ausgewählt.

In jedem Dokumentenbild i, für jedes Textzeichen j, beispielsweise der maschinen-lesbaren Zone, können Abstände d_{i,j,k} betreffend aller bekannten Vorlagen k erfasst werden. Für jeden Eintrag kann der Mittelwert hinsichtlich aller Dokumentenbilder berechnet werden gemäß d_{j,k} = mean(d_{i,j,k}). Das Endergebnis je Textzeichen kann dann berechnet werden als jedes, welches den kleinsten Abstand qᵢ = max(q_{j,k}) aufweist. Gemäß einer Ausführungsform ist q = 1-d.

Der beschriebene Ansatz zum Erfassen und Auslesen eines Textbereiches auf einem Identifikationsdokument, beispielsweise einer maschinen-lesbaren Zone, in Echtzeit operiert ohne eine genaue Ausrichtung des Identifikationsdokumentes oder des Textbereiches. Durch eine initiale Erfassung des Textbereiches und eine Fusion von Ergebnissen mehrerer Dokumentenbilder, kann die optische Zeichenerkennung hochwertige Ergebnisse bereitstellen. Da auf eine genaue Ausrichtung verzichtet werden kann, wird Zeit eingespart. Ferner kann der Textbereich schnell extrahiert werden.

Der Ansatz kann auf verschiedene Arten verbessert werden. Wenn zusätzliche Textzeichentrainingsdaten zugänglich sind, kann der Abgleich mit Vorlagen durch einen geeigneten Klassifizierer ersetzt werden. Dies kann die Erfassungsergebnisse oder Ausleseergebnisse des Textbereiches sowie die Laufzeit verbessern. Ein Verfolgen des Textbereiches kann die Robustheit erhöhen, da weitere Eingangsdaten für die optische Zeichenerkennung zur Verfügung stehen. Ferner kann eine leichte Biegung des Identifikationsdokumentes berücksichtigt werden.

Gemäß einer Ausführungsform kann die Kombination von Einzelbildern unmittelbar in der Bildebene oder der Regionsebene erfolgen. In diesem Fall könnte der OCR-Schritt pro Zeichen ein einziges Mal durchgeführt werden.

Im Folgenden wird ein Ansatz zur Erfassung eines Identifikationsdokumentes mittels eines vorab erfassten Textbereiches beschrieben. Anschließend wird das Verfolgen (engl. Tracking) von Textbereichen erläutert. Das Verfolgen erlaubt ein kontinuierliches Erfassen oder Auslesen und kann zur Überwachung der Erfassungssituation dienen. Schließlich wird auf das partielle Erfassen oder Auslesen von Textbereichen eingegangen.

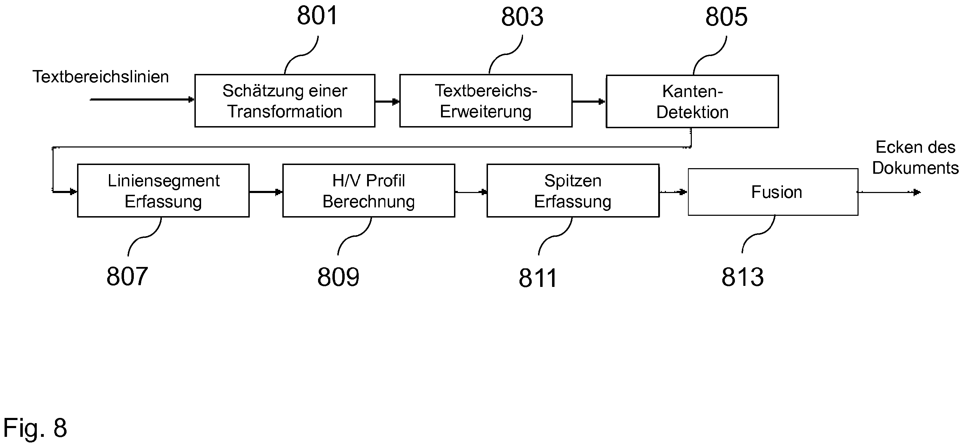

Fig. 8 zeigt ein Diagramm eines Verfahrens zum Erfassen eines Identifikationsdokumentes auf Basis eines erfassten Textbereiches gemäß einer Ausführungsform. Das Verfahren umfasst eine Mehrzahl von Schritten 801-813. Die Mehrzahl von Schritten 801-813 kann durch das Mobilgerät 100, beispielsweise den Prozessor 103, ausgeführt werden. Das Verfahren 200 zum Erfassen eines Textbereiches auf einem Identifikationsdokument kann das Verfahren zum Erfassen eines Identifikationsdokumentes auf Basis eines erfassten Textbereiches umfassen.

In Schritt 801 wird eine Transformation auf Basis von Textbereichslinien geschätzt. In Schritt 803 erfolgt eine Textbereichserweiterung. In Schritt 805 wird eine Kantendetektion durchgeführt. In Schritt 807 erfolgt eine Liniensegmenterfassung. In Schritt 809 wird eine H/V Profilberechnung durchgeführt. In Schritt 811 erfolgt eine Spitzen- oder Peak-Erfassung. In Schritt 813 wird eine Fusion durchgeführt, um Informationen bezüglich der Ecken des Identifikationsdokumentes bereitzustellen.

Die Erfassung des Identifikationsdokumentes, beispielsweise der Grenzen des Identifikationsdokumentes, kann folgendermaßen durchgeführt werden. Es kann ein allgemeiner Ansatz zur Erfassung eines perspektivisch verzerrten Rechtecks eingesetzt werden. Dabei können nach anfänglicher oder initialer Filterung von hochfrequenten Störungen zunächst Linien erfasst und danach paarweise zu Hypothesen zusammengefasst werden.

Danach kann eine Bewertung der Hypothesen je nach Beschaffenheit eines Kantenbildes entlang ausgewählter Grenzen des Identifikationsdokumentes erfolgen. Bei diesem Ansatz sollte sich das Identifikationsdokument innerhalb eines vordefinierten und durch den Benutzer einstellbaren Bereiches befinden, was einer groben Ausrichtung von Identifikationsdokument und Mobilgerät entsprechen kann.

Wenn ein Textbereich, beispielsweise eine maschinen-lesbare Zone, auf dem Identifikationsdokument vorhanden ist und deren Begrenzungen bekannt sind, kann dies als Vorwissen zur Erfassung des Identifikationsdokumentes, beispielsweise der Grenzen des Identifikationsdokumentes, verwendet werden. Zusammen mit einer Anwendung des beschriebenen Ansatzes auf eine nur gering eingeschränkte Raumlage bei der Erfassung, kann das Identifikationsdokument weitgehend automatisch während der Erfassung des Textbereiches erfasst werden.

In jedem einzelnen Dokumentenbild Fᵢ wird zunächst der Textbereich erfasst und eine Transformation T geschätzt. Dabei werden die Schwerpunkte C_{llc0} der zum Textbereich gehörigen Textzeichengruppen im Bild-Bereich jeweils zeilenweise und spaltenweise durch eine Gerade approximiert. Es ergeben sich beispielsweise L horizontale und C vertikale Geraden je Textbereich, aus welchen neue Schwerpunkte C_{llc1} geschätzt werden können. Da die Anordnung oder Geometrie der Textzeichen innerhalb des Textbereiches je nach Typ vorbekannt sein kann, beispielsweise 2x44, 2x36 oder 2x30 Textzeichen, sind Koordinaten C_{wlc} für das Modell gegeben und aus den Korrespondenzen {C_{llc1}, C_{wlc}} kann schließlich die Transformation T geschätzt werden.

Falls Fluchtpunkte verwendet werden, kann eine einheitliche horizontale und/oder vertikale Teilung geschätzt werden. Die erhaltene Transformation kann unmittelbar zur Entzerrung des Dokumentenbildes Fᵢ verwendet werden, wobei eine grobe Ausdehnung ausgehend von dem Textbereich, beispielsweise links, rechts, oben oder unten, wiederum durch eine Standardisierung oder Spezifikation des Identifikationsdokumentes gegeben sein kann. In diesem entzerrten und auf eine vorbestimmte Ausdehnung skalierten Dokumentenbild Fᵢᵣ kann nun nach Grenzen des Identifikationsdokumentes gesucht werden.

In den relevanten Bereichen des Dokumentenbildes Fᵢᵣₘₐₚ kann nun eine Kantendetektion durchgeführt werden. Dann werden horizontale und vertikale Liniensegmente, beispielsweise mit einer minimalen Länge von 3 Pixeln, erfasst. Auf den Zwischendokumentenbildern Fᵢᵣₘₐₚᵥ und Fᵢᵣₘₐₚₕ können horizontale himap und vertikale vᵢₘₐₚ Projektionsprofile berechnet werden. Mit dieser Information kann nun nach Spitzen, Peaks oder Maxima im durch die Spezifikation gegebenen Bereich gesucht werden. Die Auswahl kann unter Verwendung eines geeigneten Schwellwertes erfolgen. Zur Verbesserung der Robustheit können bei der Analyse der Projektionsprofile die Ergebnisse von mehreren einzelnen Dokumentenbildern Fᵢ verwendet werden. Dabei erfolgt eine Mittelung der beteiligten Profile beispielsweise gemäß hₘₐₚ = 1/n(hᵢₘₐₚ); vₘₐₚ = 1/n (vₘₐₚ); | i=1...n.

Aus den vorherigen Teilschritten ergeben sich jeweils zwei Indizes für die Profile hₘₐₚ, vₘₐₚ. Durch Anwendung auf das Dokumentenbild Fᵢᵣ ergibt sich ein entzerrtes Dokumentenbild, welches für weitere Analyseschritte oder auch unmittelbar zur Verfolgung verwendet werden kann. Da das Dokumentenbild Fᵢᵣ durch eine bekannte Transformation ermittelt wurde, sind damit auch die Grenzen des Identifikationsdokumentes in den ursprünglichen Dokumentenbildern bekannt. Im Falle der Fusionierung wird aus jenem Dokumentenbild extrahiert, das bezüglich der ermittelten Indizes die Summe der größten Einträge in den korrespondierenden Profilen aufweist.

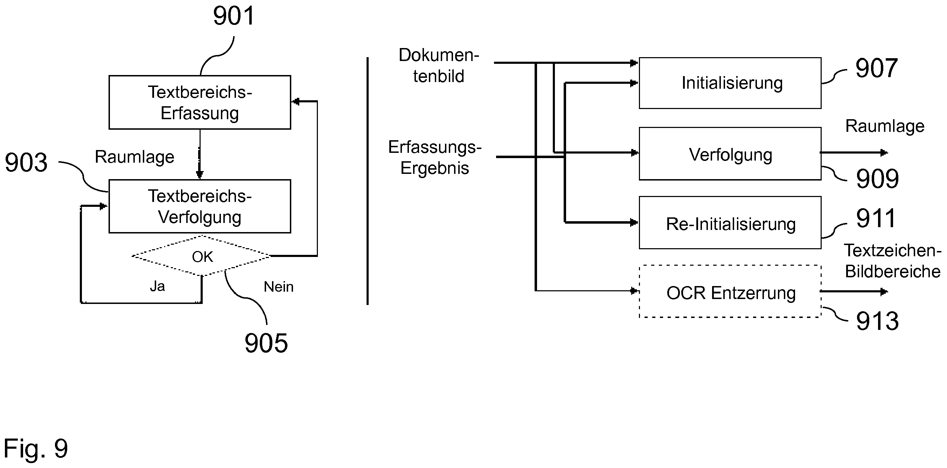

Fig. 9 zeigt ein Diagramm eines Verfahrens zum Verfolgen eines Textbereiches in einer Mehrzahl von Dokumentenbildern gemäß einer Ausführungsform. Das Verfahren umfasst eine Mehrzahl von Schritten 901-913. Die Mehrzahl von Schritten 901-913 kann durch das Mobilgerät 100, beispielsweise den Prozessor 103, ausgeführt werden. Das Verfahren 200 zum Erfassen eines Textbereiches auf einem Identifikationsdokument kann das Verfahren zum Verfolgen eines Textbereiches in einer Mehrzahl von Dokumentenbildern umfassen.

Die Schritte 901-905 zeigen den grundsätzlichen Ablauf bei der Verfolgung des Textbereiches. In Schritt 901 wird eine Erfassung des Textbereichs durchgeführt, wobei eine Raumlage bestimmt wird. In Schritt 903 erfolgt eine Verfolgung des Textbereichs auf Basis der bestimmten Raumlage. In Schritt 905 wird das Ergebnis der Verfolgung des Textbereichs geprüft, wobei bei erfolgreicher Verfolgung des Textbereichs mit Schritt 903 fortgefahren wird, und wobei bei nicht erfolgreicher Verfolgung des Textbereichs mit Schritt 901 fortgefahren wird.

Die Schritte 907-913 können innerhalb der Verfolgung des Textbereichs, beispielsweise in Schritt 903, ausgeführt werden. In Schritt 907 erfolgt eine Initialisierung auf Basis eines Dokumentenbildes und eines Erfassungsergebnisses. In Schritt 909 wird eine Verfolgung auf Basis des Dokumentenbildes durchgeführt, wobei eine Raumlage bestimmt werden kann. In Schritt 911 erfolgt eine Re-Initialisierung auf Basis des Erfassungsergebnisses. In Schritt 913 wird eine OCR Entzerrung auf Basis des Dokumentenbildes durchgeführt, um Textzeichenbildsegmente oder Textzeichen-Bildbereiche bereitzustellen. Die Initialisierung und Re-Initialisierung in den Schritten 907, 911 erfolgen auf Basis des Erfassungsergebnisses. Gemäß einer Ausführungsform wird bei der Verfolgung nur das aktuelle Dokumentenbild verarbeitet. In Schritt 913 können OCR-Daten aus dem aktuellen Dokumentenbild erzeugt werden.

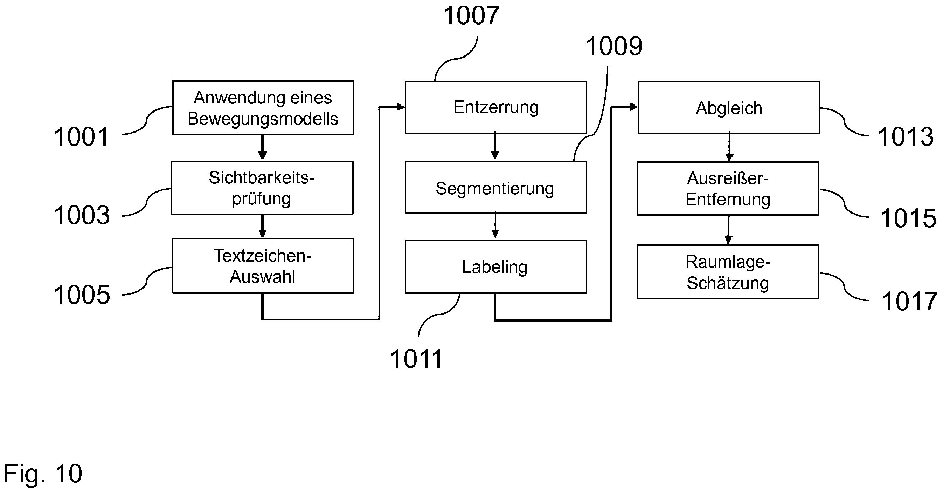

Fig. 10 zeigt ein Diagramm eines Verfahrens zum Verfolgen eines Textbereiches in einer Mehrzahl von Dokumentenbildern gemäß einer Ausführungsform. Das Verfahren umfasst eine Mehrzahl von Schritten 1001-1017. Die Mehrzahl von Schritten 1001-1017 kann durch das Mobilgerät 100, beispielsweise den Prozessor 103, ausgeführt werden. Das Verfahren 200 zum Erfassen eines Textbereiches auf einem Identifikationsdokument kann das Verfahren zum Verfolgen eines Textbereiches in einer Mehrzahl von Dokumentenbildern umfassen.

Die Schritte 1001-1017 verdeutlichen die Vorgänge bei der Verfolgung eines einzelnen Dokumentenbildes. In Schritt 1001 wird ein Bewegungsmodell angewendet. In Schritt 1003 wird eine Sichtbarkeitsprüfung durchgeführt. In Schritt 1005 erfolgt eine Textzeichenauswahl. In Schritt 1007 wird eine Entzerrung durchgeführt. In Schritt 1009 erfolgt eine Segmentierung. In Schritt 1011 wird ein Labeling durchgeführt. In Schritt 1013 erfolgt ein Abgleich. In Schritt 1015 wird eine Ausreißer-Entfernung durchgeführt. In Schritt 1017 erfolgt eine Schätzung der Raumlage.

Um eine schnelle Rückmeldung für einen Benutzer zu erlauben, kann die Erfassung des Textbereiches mit einer relativ geringen Bildauflösung arbeiten. Zudem sollte der Textbereich zur Verarbeitung vollständig sichtbar sein, da möglicherweise keine Vorkenntnis von Dokumentenbild zu Dokumentenbild transferiert wird. Eine Verfolgung des Textbereiches von Dokumentenbild zu Dokumentenbild kann jedoch ein kontinuierliches Erfassen oder Auslesen von Textzeichen erlauben. Zudem kann die Erfassungssituation besser überwacht werden, da Bewegungen des Benutzers unmittelbar ausgewertet werden können und dadurch eine Rückmeldung und/oder Anleitung durch das Mobilgerät erfolgen kann.

Textbereiche können mit Ansätzen zur Verfolgung natürlicher Merkmale (engl. Natural Features) oftmals nicht hinreichend verfolgt werden. Deshalb wird ein Ansatz zur Verfolgung des Textbereiches mit sechs Freiheitsgraden, basierend auf einzelnen Textzeichen, eingesetzt. Zunächst erfolgt eine einmalige Erfassung des Textbereiches, um den Verfolger zu initialisieren. Mit der bekannten Transformation zwischen Bild-Bereich und Welt-Bereich werden die einzelnen Textzeichenbildsegmente entzerrt, segmentiert und abgelegt. Außerdem kann eine erste Raumlage oder Pose berechnet werden.

Zur Laufzeit kann zunächst die vorhergehende Raumlage verwendet werden, um zusammen mit intrinsischen Parametern der Bildkamera eine Welt-Position eines Referenzbereiches in das Dokumentenbild zu projizieren. Unter Beachtung der Grenzen des Dokumentenbildes lassen sich somit Rückschlüsse auf die Sichtbarkeit treffen. Davon können pro Textzeichengruppe oder Linie des Textbereiches n >= 2 sichtbare Referenzbereiche ausgewählt werden, deren neue Position im Dokumentenbild gesucht wird. Dabei kann lokal eine neue Transformation T_{lc} berechnet werden, womit der korrespondierende Bereich im Dokumentenbild entzerrt werden kann. Nach einer Segmentierung werden die m größten zusammenhängenden Bereiche ausgewählt. Der jeweilige Bereich wird dann auf eine einheitliche Ausdehnung gebracht und mittels eines Überlapp-Deskriptors, analog zur Zeichenerkennung, in einen Merkmalsvektor konvertiert, welcher mit den Daten der aktuellen Referenzregion R_{lc} verglichen werden kann. Bei einer Übereinstimmung wird das zugehörige Zentrum des Bereiches als neue Position abgelegt. Mit allen n >= 2 Korrespondenzen je Linie, mit mindestens 2 Linien, kann mittels eines RANSAC-Ansatzes eine Homographie geschätzt werden. Bei Erfolg wird die Schätzung der Raumlage aus den gefilterten Erfassungen, sogenannte Inliers, unter Verwendung aktueller intrinsischer Parameter der Bildkamera durchgeführt.

Zur Verbesserung von Robustheit und Laufzeit kann ein Bewegungsmodell verwendet werden. Dabei wird basierend auf den letzten Erfassungen Pᵢ, Pᵢ₋₁ die aktuelle Raumlage entsprechend geschätzt, beispielsweise durch eine Mittelung der Änderungen von Translation und/oder Rotation.

Falls die Verfolgung abbricht, kann mittels einer erneuten Erfassung des Textbereiches die Raumlage erneut bestimmt werden, ohne dass die Referenzdaten aktualisiert werden. Die Extraktion der entzerrten Textzeichenbildsegmente oder Patch-Daten erfolgt unter Verwendung der aktuellen Raumlage und unter Berücksichtigung der Sichtbarkeit analog zur Erfassung des Textbereiches und kann auf die beschriebene Weise durchgeführt werden. Der Textbereich könnte selbst bei der Initialisierung nicht vollständig sichtbar sein. Dann kann eine bekannte Raumlage verwendet werden. Fehlende Referenzdaten können während der Verfolgung hinzugefügt werden.

Ein partielles Erfassen oder Auslesen des Textbereiches kann beispielsweise folgendermaßen realisiert werden. Wenn die Textbereichsanordnung oder Lage eines vollständig oder unvollständig sichtbaren Textbereiches auf dem Identifikationsdokument bekannt ist, können einzelne Textzeichen gemäß ihrer Sichtbarkeit und optional gemäß einer Konfidenz bezüglich von Referenzdaten erfasst oder ausgelesen werden. Damit sind eine lokale Rückmeldung und eine schnellere Erfassung möglich, falls einzelne Textzeichen der Konfidenzprüfung zunächst nicht genügen.

Während typischerweise der gesamte Textbereich erfasst oder ausgelesen wird, kann eine Modifikation zum Erfassen oder Auslesen von Teilresultaten in Teiltextbereichen durchgeführt werden. Es kann je Textzeichen eine Liste von Erfassungen oder Auslesungen verwaltet werden, welche eine Konfidenz bezüglich bekannter Referenzdaten anzeigen kann. Damit kann entschieden werden, ob eine ausreichende Konfidenz oder Abdeckung der räumlichen Lage mit optionaler Orientierungskarte (engl. Orientation Map) vorliegt. Dies kann entsprechend visualisiert werden, sodass der Benutzer angeleitet werden kann, Textzeichen mit geringer Konfidenz nochmals zu erfassen. Damit können auch mögliche lokale Modifikationen des Textbereiches zum Zweck der Prüfung des Identifikationsdokumentes auf Basis der Konfidenz visualisiert werden. Durch Verwendung einer Orientierungskarte kann ein nicht erwünschter Einfluss der Erfassungssituation auf die finale Konfidenz eingeschränkt werden.

Folglich können Erweiterungen für die mobile Auswertung von Identifikationsdokumenten mit Textbereichen, beispielsweise maschinen-lesbaren Zonen, eingesetzt werden, welche es ermöglichen, die Grenzen des Identifikationsdokumentes zu bestimmen, den Textbereich von Dokumentenbild zu Dokumentenbild zu verfolgen, sowie den Inhalt des Textbereiches partiell zu erfassen oder auszulesen. Das Mobilgerät kann ein Smartphone sein. Im Falle der Berechnung von Teilen des Verfolgungsansatzes mit mobilen Grafikprozessoren, ist ein weiterer Leistungsgewinn zu erwarten.

Es wird ein effizienter Ansatz zum Erfassen oder Auslesen von Textbereichen mit einem Mobilgerät auf Basis von Dokumentenbildern eingesetzt. Dabei wird das Identifikationsdokument nicht manuell ausgerichtet und es werden keine weiteren Annahmen über die Anordnung des Textbereiches auf dem Identifikationsdokument eingebracht. Optional kann der Textbereich verfolgt werden, sodass je nach Sichtbarkeit und Konfidenz partiell erfasst oder ausgelesen werden kann. Nach Erfassung einiger Dokumentenbilder kann ein Fusionsschritt bezüglich der optischen Zeichenerkennung erfolgen zum Erfassen oder Auslesen des Textbereiches und optional zur Bestimmung der Grenzen des Identifikationsdokumentes.

Die optische Zeichenerkennung kann auf einer Binarisierung mit einem folgenden Abtrennen eines Textzeichenbereichs basieren. Unter Verwendung von Trainingsdaten kann das Abtrennen verbessert werden. Dabei kann ein Ansatz maschinellen Lernens, beispielsweise eine Stützvektormaschine (Support Vector Machine, SVM), unter Verwendung voller Informationen der Textzeichenbildsegmente eingesetzt werden. Die Fusion unter Verwendung von Dokumentenbildern kann dahingehend modifiziert werden, Abtastwerte aus verschiedenen Blickrichtungen zu verwenden. Dabei kann eine leichte Zitterbewegung, welche in mobilen Erfassungsszenarien vorhanden sein kann, für diesen Zweck ausreichen.

Es werden mehrere Vorteile erreicht. Zu einen kann auf eine genaue manuelle Ausrichtung, beispielsweise eine manuelle orthogonale Ausrichtung, des Textbereiches relativ zu der Bildkamera verzichtet werden. Zudem kann einem Benutzer eine visuelle Rückmeldung über den Status der Erfassung des Textbereiches in Echtzeit bereitgestellt werden. Die Erfassungsergebnisse können automatisch, sowohl vollständig als auch partiell, fusioniert werden, um die Robustheit zu erhöhen.

Es besteht ferner die Möglichkeit, die Grenzen des Identifikationsdokumentes auf Basis der Erfassung des Textbereiches zu lokalisieren. Dabei können die Grenzen des Identifikationsdokumentes auf Basis mehrerer Erfassungsergebnisse des Textbereiches bestimmt werden. Die Erfassungsbedingungen können mittels eines Verfolgens des Textbereiches überwacht werden. Beispielsweise kann eine Überwachung eines Abstandes oder einer perspektivischen Verzerrung erfolgen. Ferner kann ein Verfolgen und ein partielles Erfassen oder Auslesen des Textbereiches durchgeführt werden.

Folglich wird ein mobiles Erfassen oder Auslesen von Textbereichen mittels Mobilgeräten ohne zusätzliche Hardware und ohne eine manuelle Ausrichtung des Identifikationsdokumentes bezüglich der Bildkamera erreicht. Dabei kann das Identifikationsdokument unter Verwendung der Erfassungsergebnisse des Textbereiches als Vorabinformation in dem Dokumentenbild erfasst werden.

### BEZUGSZEICHENLISTE

- 100: Mobilgerät
- 101: Bildkamera
- 103: Prozessor

- 200: Verfahren
- 201: Erfassen
- 203: Segmentieren
- 205: Auswählen
- 207: Bestimmen
- 209: Vergleichen

- 301: Textbereich
- 303: Identifikationsdokument
- 305: Dokumentenbild

- 501-513: Schritte
- 601-611: Schritte
- 801-813: Schritte
- 901-913: Schritte
- 1001-1017: Schritte

## Patentansprüche

1. Mobilgerät (100) zum Erfassen und Entzerren eines Textbereiches (301) auf einem Identifikationsdokument (303), das ein Reisepass oder Personalausweis ist, und für das eine Strukturinformation des Textbereichs (301) auf dem Identifikationsdokument (303) vorbestimmt ist, wobei der Textbereich (301) eine maschinen-lesbare Zone des Identifikationsdokumentes (303) ist und wobei die Strukturinformation die Anzahl von Textzeichen je Textzeile beinhaltet, mit:
einer Bildkamera (101), welche ausgebildet ist, ein Bild des Identifikationsdokumentes (303) zu erfassen, um ein Dokumentenbild (305) zu erhalten; und
einem Prozessor (103), welcher ausgebildet ist:
- das Dokumentenbild (305) zu segmentieren, um eine Mehrzahl von Bildsegmenten zu erhalten;
- unter der Mehrzahl der Bildsegmente als Textzeichenbildsegmente die Bildsegmente auszuwählen die Textzeichen repräsentieren,
- ähnliche Textzeichenbildsegmente mit räumlicher Kohärenz unter Verwendung von einer Delaunay-Triangulation der Schwerpunkte der Textzeichenbildsegmente zu gruppieren;
- für jede Textzeichengruppe der Mehrzahl von Textzeichengruppen die Anzahl von Textzeichen je Textzeile mit der Anzahl der Textzeichen je Textzeile gemäß der Strukturinformation zu vergleichen, um den Textbereich (301) auf dem Identifikationsdokument (303) zu erfassen,
wobei der Prozessor (103) ausgebildet ist, eine Raumlage der Bildkamera (101) relativ zu dem erfassten Textbereich (301) zu bestimmen, und den erfassten Textbereich perspektivisch zu entzerren, wobei durch eine lineare Regression auf die Schwerpunkte der erfassten Textzeichenbildsegmente des Textbereiches Linien angepasst werden und diese Linien geschnitten werden, um eine Schätzung der vier äußersten Textzeichenmittelpunkte bereitzustellen und mit Hilfe der Strukturinformation und den vier geschätzten äußersten Textzeichenmittelpunkte den Textbereich zu entzerren.

2. Mobilgerät (100) nach Anspruch 1, wobei der Prozessor (103) ausgebildet ist, das Dokumentenbild (305) mittels einer Segmentierung, insbesondere einer morphologischen Segmentierung, zu segmentieren, um die Mehrzahl von Bildsegmenten zu erhalten.

3. Mobilgerät (100) nach einem der vorstehenden Ansprüche, wobei der Prozessor (103) ausgebildet ist, eine Mehrzahl von Bildsegmentmaßen der Mehrzahl von Bildsegmenten zu bestimmen, und die Mehrzahl von Bildsegmentmaßen mit einem vorbestimmten Textzeichenmaß zu vergleichen, um die Mehrzahl von Textzeichenbildsegmenten aus der Mehrzahl von Bildsegmenten auszuwählen.

4. Mobilgerät (100) nach einem der vorstehenden Ansprüche, wobei der Prozessor (103) ausgebildet ist, eine erste Textzeichengruppe und eine zweite Textzeichengruppe der Mehrzahl von Textzeichengruppen miteinander zu kombinieren, oder eine Textzeichengruppe der Mehrzahl von Textzeichengruppen in eine erste Textzeichengruppe und eine zweite Textzeichengruppe zu teilen.

5. Mobilgerät (100) nach einem der vorstehenden Ansprüche, wobei der Prozessor (103) ausgebildet ist, eine optische Zeichenerkennung innerhalb des erfassten Textbereiches (301) auf dem Identifikationsdokument (303) durchzuführen.

6. Mobilgerät (100) nach Anspruch 5, wobei einem Textzeichen des Textbereiches (301) ein vorbestimmter Zeichensatz zugeordnet ist, wobei der vorbestimmte Zeichensatz zulässige Buchstaben, Ziffern, oder Symbole des Textzeichens anzeigt, und wobei die optische Zeichenerkennung des Textzeichens unter Verwendung des vorbestimmten Zeichensatzes durchgeführt wird.

7. Mobilgerät (100) nach Anspruch 5 oder 6, wobei die Bildkamera (101) ausgebildet ist, ein weiteres Bild des Identifikationsdokumentes (303) zu erfassen, um ein weiteres Dokumentenbild zu erhalten, und wobei der Prozessor (103) ausgebildet ist, den Textbereich (301) in dem weiteren Dokumentenbild zu erfassen, und die optische Zeichenerkennung innerhalb des erfassten Textbereiches (301) ferner unter Verwendung des weiteren Dokumentenbildes durchzuführen.

8. Mobilgerät (100) nach einem der vorstehenden Ansprüche, wobei der Textbereich (301) eine vorbestimmte Textbereichsanordnung gemäß eines vorbestimmten Textbereichsanordnungsmaßes auf dem Identifikationsdokument (303) aufweist, und wobei der Prozessor (103) ausgebildet ist, das Identifikationsdokument (303) in dem Dokumentenbild (305) auf Basis des erfassten Textbereiches (301) und des vorbestimmten Textbereichsanordnungsmaßes zu erfassen.

9. Mobilgerät (100) nach einem der vorstehenden Ansprüche, wobei der Prozessor (103) ausgebildet ist, eine Raumlage der Bildkamera (101) relativ zu dem erfassten Textbereich (301) zu bestimmen, wobei die Bildkamera (101) ausgebildet ist, ein weiteres Bild des Identifikationsdokumentes (303) zu erfassen, um ein weiteres Dokumentenbild zu erhalten, und wobei der Prozessor (103) ausgebildet ist, den Textbereich (301) in dem weiteren Dokumentenbild unter Verwendung der bestimmten Raumlage zu erfassen.

10. Verfahren (200) zum Erfassen und Entzerren eines Textbereiches (301) auf einem Identifikationsdokument (303), das ein Reisepass oder Personalausweis ist, und für das eine Strukturinformation des Textbereichs (301) auf dem Identifikationsdokument (303) vorbestimmt ist, wobei der Textbereich (301) eine maschinen-lesbare Zone des Identifikationsdokumentes (303) ist und wobei die Strukturinformation die Anzahl von Textzeichen je Textzeile beinhaltet, mit:
Erfassen (201) eines Bildes des Identifikationsdokumentes (303), um ein Dokumentenbild (305) zu erhalten;
Segmentieren (203) des Dokumentenbildes (305), um eine Mehrzahl von Bildsegmenten zu erhalten;
Auswählen, unter der Mehrzahl der Bildsegmente, derjenigen Bildsegmente, die Textzeichen repräsentieren, als Textzeichenbildsegmente;
Gruppieren ähnlicher Textzeichenbildsegmente mit räumlicher Kohärenz unter Verwendung von einer Delaunay-Triangulation der Schwerpunkte der Textzeichenbildsegmente;
Vergleichen der Anzahl von Textzeichen je Textzeile für jede Textzeichengruppe der Mehrzahl von Textzeichengruppen mit der Anzahl der Textzeichen je Textzeile gemäß der Strukturinformation, um den Textbereich (301) auf dem Identifikationsdokument (303) zu erfassen;
Bestimmen einer Raumlage der Bildkamera (101) relativ zu dem erfassten Textbereich (301), und perspektivisches Entzerren des erfassten Textbereichs, wobei durch eine lineare Regression auf die Schwerpunkte der erfassten Textzeichenbildsegmente des Textbereiches Linien angepasst werden und diese Linien geschnitten werden, um eine Schätzung der vier äußersten Textzeichenmittelpunkte bereitzustellen und mit Hilfe der Strukturinformation und den vier geschätzten äußersten Textzeichenmittelpunkte den Textbereich zu entzerren.

11. Computerprogramm mit einem Programmcode zum Ausführen des Verfahrens (200) nach Anspruch 10, wenn das Computerprogramm auf einem Computer ausgeführt wird.

## Claims

1. A mobile device (100) for capturing and equalizing a text area (301) on an identification document (303) which is a passport or identity card and for which a structural information of the text area (301) on the identification document (303) is predetermined, wherein the text area (301) is a machine-readable zone of the identification document (303) and wherein the structural information comprises the number of text characters per text line, the mobile device (100) comprising:
an image camera (101) which is configured to capture an image of the identification document (303) in order to obtain a document image (305); and
a processor (103) which is configured:
- to segment the document image (305) to obtain a plurality of image segments;
- to select, as text character image segments, the image segments representing text characters from among the plurality of image segments,
- to group similar text character image segments with spatial coherence using a Delaunay triangulation of the centroids of the text character image segments;
- to compare for each text character group of the plurality of text character groups the number of text characters per text line with the number of text characters per text line according to the structural information in order to detect the text area (301) on the identification document (303),
wherein the processor (103) is configured to determine a spatial position of the image camera (101) relative to the captured text area (301) and to equalize the captured text area in perspective, wherein lines are adapted by a linear regression on the centroids of the detected text character image segments of the text area and these lines are intersected in order to provide an estimate of the four outermost text character centers and to equalize the text area using the structural information and the four estimated outermost text character centers.

2. The mobile device (100) according to claim 1, wherein the processor (103) is configured to segment the document image (305) by means of a segmentation, in particular a morphological segmentation, in order to obtain the plurality of image segments.

3. The mobile device (100) according to one of the preceding claims, wherein the processor (103) is configured to determine a plurality of image segment dimensions of the plurality of image segments and to compare the plurality of image segment dimensions with a predetermined text character dimension in order to select the plurality of text character image segments from the plurality of image segments.

4. The mobile device (100) according to one of the preceding claims, wherein the processor (103) is configured to combine a first text character group and a second text character group of the plurality of text character groups with each other or to split a text character group of the plurality of text character groups into a first text character group and a second text character group.

5. The mobile device (100) according to one of the preceding claims, wherein the processor (103) is configured to execute an optical character recognition within the captured text area (301) on the identification document (303).

6. The mobile device (100) according to claim 5, wherein a text character of the text area (301) is assigned a predetermined character set, wherein the predetermined character set indicates permitted letters, numbers or symbols of the text character and wherein the optical character recognition of the text character is performed using the predetermined character set.

7. The mobile device (100) according to claim 5 or 6, wherein the image camera (101) is configured to capture a further image of the identification document (303) in order to obtain a further document image and wherein the processor (103) is configured to capture the text area (301) in the further document image and to furthermore execute the optical character recognition within the captured text area (301) using the further document image.

8. The mobile device (100) according to any one of the preceding claims, wherein the text area (301) has a predetermined text area arrangement according to a predetermined text area arrangement dimension on the identification document (303) and wherein the processor (103) is configured to capture the identification document (303) in the document image (305) on the basis of the captured text area (301) and the predetermined text area arrangement dimension.

9. The mobile device (100) according to one of the preceding claims, wherein the processor (103) is configured to determine a spatial position of the image camera (101) relative to the captured text area (301), wherein the image camera (101) is configured to capture a further image of the identification document (303) in order to obtain a further document image and wherein the processor (103) is configured to capture the text area (301) in the further document image using the determined spatial position.

10. A method (200) for capturing and equalizing a text area (301) on an identification document (303) which is a passport or identity card and for which structural information of the text area (301) on the identification document (303) is predetermined, wherein the text area (301) is a machine-readable zone of the identification document (303) and the structural information comprises the number of text characters per text line, the method comprising:
capturing (201) an image of the identification document (303) to obtain a document image (305);
segmenting (203) the document image (305) to obtain a plurality of image segments;
selecting, as text character image segments, the image segments representing text characters from among the plurality of image segments;
grouping similar text character image segments with spatial coherence using a Delaunay triangulation of the centroids of the text character image segments;
comparing for each text character group of the plurality of text character groups the number of text characters per text line with the number of text characters per text line according to the structural information in order to detect the text area (301) on the identification document (303),
determining a spatial position of the image camera (101) relative to the captured text area (301) and equalizing of the captured text area in perspective, wherein lines are adapted by a linear regression on the centroids of the captured text character image segments of the text area and those lines are intersected to provide an estimate of the four outermost text character centers and to equalize the text area using the structural information and the four estimated outermost text character centers.

11. A computer program with a program code for executing the method (200) according to claim 10, when the computer program is executed on a computer.

## Revendications

1. Appareil mobile (100) destiné à capturer et à égaliser une zone de texte (301) sur un document d'identification (303), qui est un passeport ou une carte d'identité, et pour lequel une information de structure de la zone de texte (301) sur le document d'identification (303) est prédéterminée, la zone de texte (301) étant une zone lisible par machine du document d'identification (303) et l'information de structure contenant le nombre de caractères de texte par ligne de texte, comprenant :
une caméra d'imagerie (101), qui est configurée pour capturer une image du document d'identification (303) afin d'obtenir une image de document (305) ; et
un processeur (103) qui est configuré pour :
- segmenter l'image de document (305) afin d'obtenir une pluralité de segments d'image ;
- parmi la pluralité de segments d'image, sélectionner en tant que segments d'image de caractères de texte les segments d'image qui représentent les caractères de texte ;
- grouper les segments d'image de caractères de texte similaires avec une cohérence spatiale en utilisant une triangulation de Delaunay des barycentres des segments d'image de caractères de texte ;
- pour chaque groupe de caractères de texte de la pluralité de groupes de caractères de texte, comparer le nombre de caractères de texte par ligne de texte au nombre de caractères de texte par ligne de texte selon l'information de structure afin de capturer la zone de texte (301) sur le document d'identification (303),
le processeur (103) étant configuré pour déterminer une position dans l'espace de la caméra d'imagerie (101) par rapport à la zone de texte (301) capturée et pour égaliser en perspective la zone de texte capturée, des lignes étant adaptées par une régression linéaire sur les barycentres des segments d'image de caractères de texte capturés de la zone de texte et ces lignes étant découpées afin de fournir une estimation des quatre centres de caractère de texte les plus à l'extérieur et d'égaliser la zone de texte à l'aide de l'information de structure et des quatre centres de caractère de texte les plus à l'extérieur estimés.

2. Appareil mobile (100) selon la revendication 1, le processeur (103) étant configuré pour segmenter l'image de document (305) au moyen d'une segmentation, notamment une segmentation morphologique, en vue d'obtenir la pluralité de segments d'image.

3. Appareil mobile (100) selon l'une des revendications précédentes, le processeur (103) étant configuré pour déterminer une pluralité de cotes de segment d'image de la pluralité de segments d'image, et pour comparer la pluralité de cotes de segment d'image à une cote de segment d'image prédéterminée afin de sélectionner la pluralité de segments d'image de caractères de texte à partir de la pluralité de segments d'image.

4. Appareil mobile (100) selon l'une des revendications précédentes, le processeur (103) étant configuré pour combiner entre eux un premier groupe de caractères de texte et un deuxième groupe de caractères de texte de la pluralité de groupes de caractères de texte, ou pour diviser un groupe de caractères de texte de la pluralité de groupes de caractères de texte en un premier groupe de caractères de texte et un deuxième groupe de caractères de texte.

5. Appareil mobile (100) selon l'une des revendications précédentes, le processeur (103) étant configuré pour effectuer une reconnaissance optique de caractères sur le document d'identification (303) à l'intérieur de la zone de texte (301) capturée.

6. Appareil mobile (100) selon la revendication 5, un jeu de caractères prédéterminé étant associé à un caractère de texte de la zone de texte (301), le jeu de caractères prédéterminé affichant des lettres, chiffres ou symboles autorisés du caractère de texte, et la reconnaissance optique de caractères du caractère de texte étant effectuée en utilisant le jeu de caractères prédéterminé.

7. Appareil mobile (100) selon la revendication 5 ou 6, la caméra d'imagerie (101) étant configurée pour capturer une image supplémentaire du document d'identification (303) afin d'obtenir une image de document supplémentaire, et le processeur (103) étant configuré pour capturer la zone de texte (301) dans l'image de document supplémentaire et effectuer la reconnaissance optique de caractères à l'intérieur de la zone de texte (301) capturée en plus en utilisant l'image de document supplémentaire.

8. Appareil mobile (100) selon l'une des revendications précédentes, la zone de texte (301) présentant un arrangement de zone de texte prédéterminé conformément à une cote d'arrangement de zone de texte prédéterminée sur le document d'identification (303), et le processeur (103) étant configuré pour capturer le document d'identification (303) dans l'image de document (305) sur la base de la zone de texte (301) capturée et de la cote d'arrangement de zone de texte prédéterminée.

9. Appareil mobile (100) selon l'une des revendications précédentes, le processeur (103) étant configuré pour déterminer une position dans l'espace de la caméra d'imagerie (101) par rapport à la zone de texte (301) capturée, la caméra d'imagerie (101) étant configurée pour capturer une image supplémentaire du document d'identification (303) afin d'obtenir une image de document supplémentaire, et le processeur (103) étant configuré pour capturer la zone de texte (301) dans l'image de document supplémentaire en utilisant la position dans l'espace déterminée.

10. Procédé (200) pour capturer et égaliser une zone de texte (301) sur un document d'identification (303), qui est un passeport ou une carte d'identité, et pour lequel une information de structure de la zone de texte (301) sur le document d'identification (303) est prédéterminée, la zone de texte (301) étant une zone lisible par machine du document d'identification (303) et l'information de structure contenant le nombre de caractères de texte par ligne de texte, comprenant :
la capture (201) d'une image du document d'identification (303) afin d'obtenir une image de document (305) ;
la segmentation (203) de l'image de document (305) afin d'obtenir une pluralité de segments d'image ;
la sélection, parmi la pluralité de segments d'image, les segments d'image qui représentent les caractères de texte en tant que segments d'image de caractères de texte ;
le groupement des segments d'image de caractères de texte similaires avec une cohérence spatiale en utilisant une triangulation de Delaunay des barycentres des segments d'image de caractères de texte ;
la comparaison du nombre de caractères de texte par ligne de texte, pour chaque groupe de caractères de texte de la pluralité de groupes de caractères de texte, au nombre de caractères de texte par ligne de texte selon l'information de structure afin de capturer la zone de texte (301) sur le document d'identification (303),
la détermination d'une position dans l'espace de la caméra d'imagerie (101) par rapport à la zone de texte (301) capturée et l'égalisation en perspective de la zone de texte capturée, des lignes étant adaptées par une régression linéaire sur les barycentres des segments d'image de caractères de texte capturés de la zone de texte et ces lignes étant découpées afin de fournir une estimation des quatre centres de caractère de texte les plus à l'extérieur et d'égaliser la zone de texte à l'aide de l'information de structure et des quatre centres de caractère de texte les plus à l'extérieur estimés.

11. Programme informatique comprenant un code de programme destiné à mettre en œuvre le procédé (200) selon la revendication 10 lorsque le programme informatique est exécuté sur un ordinateur.
